# FASCICULE DE BREVET EUROPEEN

(11) **EP 3 245 685 B1**
(45) Date de publication et mention de la délivrance du brevet: **14.11.2018**
(21) Numéro de dépôt: 16700701.2
(22) Date de dépôt: 13.01.2016
(51) Int. Cl.: H01M 10/42, H01M 10/48, H04Q 9/00, H04B 3/54

(54) **PROCEDE DE COMMUNICATION ENTRE UN ACCUMULATEUR ELECTROCHIMIQUE ET UNE ELECTRONIQUE DE COMMANDE PAR COURANT PORTEUR EN LIGNE**
VERFAHREN ZUR KOMMUNIKATION ZWISCHEN EINER BATTERIEZELLE UND EINER ELEKTRONISCHEN STEUEREINHEIT MIT STROMLEITUNGSKOMMUNIKATION
METHOD FOR COMMUNICATION BETWEEN AN ELECTROCHEMICAL BATTERY AND AN ELECTRONIC CONTROL UNIT BY POWER-LINE-COMMUNICATION

(30) Priorité: 13.01.2015 FR 1550263
(43) Date de publication de la demande: 22.11.2017
(73) Titulaire: Commissariat à l'Énergie Atomique et aux Énergies Alternatives, 75015 Paris (FR)
(72) Inventeur: MASSON, Olivier, 38100 Grenoble (FR); REYNIER, Yvan, 38120 Saint-Egreve (FR)
(74) Mandataire: Nony
(86) Numéro de dépôt international: PCT/EP2016/050512
(87) Numéro de publication internationale: WO 2016/113276

(56) Documents cités:
- EP-A1- 1 892 791
- EP-A1- 2 983 238
- DE-A1-102012 208 820
- US-A1- 2013 031 318

## Description

### Domaine technique

La présente invention concerne le domaine des accumulateurs électrochimiques.

L'invention se rapporte notamment à des accumulateurs électrochimiques intelligents, c'est-à-dire possédant une électronique associée individuelle, un élément permettant l'authentification de l'accumulateur et des capteurs servant à déterminer la pression, la température, le courant, et l'état de charge et de santé et pouvant communiquer ces données au moyen d'un module de communication.

L'invention concerne plus particulièrement les procédés de communication de ces données entre un accumulateur intelligent et un autre accumulateur, ou entre un accumulateur intelligent et l'électronique de commande d'un pack-batterie ou d'un système de contrôle de batterie d'accumulateurs (en anglais, « Battery Management System », acronyme BMS).

L'invention vise ainsi à améliorer les accumulateurs actuels en protégeant les utilisateurs d'accumulateurs ne remplissant pas les spécifications de sécurité et donc potentiellement dangereux. Elle vise aussi à permettre, via des capteurs et un module électronique, la mesure et le calcul de différents paramètres tels que la température, la pression interne de l'accumulateur électrochimique, le courant aux bornes de l'accumulateur, l'état de santé, l'état de charge, la charge maximale effective d'un accumulateur, et en permettant une communication simplifiée des données d'un accumulateur à une entité extérieure.

### Art antérieur

Les fabricants de batteries Li-ion à travers le monde commercialisent depuis une vingtaine d'année des cellules (avec historiquement un début de commercialisation initié par la société SONY en 1991, pour alimenter des ordinateurs portables), dans une grande variété de tailles et de formes, les éléments étant dimensionnés en fonction de l'application visée. L'objectif des fabricants de cellules est d'augmenter l'autonomie (l'énergie) des cellules, tout en améliorant leur durée de vie (nombre de cycles) et leur légèreté. Mais pour avoir une technologie durable et déployée sur l'ensemble des marchés liés à la mobilité et au stockage d'énergie, la fiabilité des batteries est un sujet de premier ordre.

Par exemple, en 2006, la société SONY a fait face à un énorme problème de fiabilité de leurs batteries. Un avion a pris feu peu avant l'atterrissage. L'enquête a privilégié comme cause un départ de feu dans des batteries produites par Sony et servant à l'alimentation électrique d'équipements embarqués dans cet avion.

En outre, avec la généralisation de certaines technologies dans tous les systèmes embarquant de l'énergie, comme les batteries lithium-ion dans les téléphones portables par exemple, les marchés de remplacement de batterie se développent de plus en plus. Ces marchés de remplacement sont le plus souvent pilotés par le coût, au profit de fabrications à faible coût (low-cost) qui n'intègrent pas forcément toutes les subtilités des conceptions du produit d'origine garantissant une grande sécurité. Par exemple, il arrive que des téléphones ou des ordinateurs prennent feu spontanément à cause d'un remplacement de la batterie d'origine par une batterie low-cost de substitution.

Il existe déjà un certain nombre de publications ou de brevets se rapportant à l'optimisation de l'énergie embarquée des accumulateurs électrochimiques et à des systèmes à capteurs et dispositif de sécurité pour éviter les surpressions internes à un accumulateur qui peuvent être dangereuses et compromettre l'étanchéité de celui-ci.

Parmi les points clés abordés, on retrouve la connaissance de l'état de charge (en anglais « State of Charge », et dans la suite du texte désigné par l'acronyme SOC), de l'état de santé (en anglais « State of Health », et dans la suite du texte désigné par l'acronyme SOH) ou d'un état de sécurité lié à ces accumulateurs électrochimiques. Le SOC indique l'énergie encore disponible dans un accumulateur avant sa recharge éventuelle. Le SOH permet de savoir combien de temps un accumulateur sera utilisable avec des performances spécifiques. L'état de sécurité permet de prédire des situations pour lesquelles des événements inopportuns ou des accidents peuvent arriver (court-circuit ou surpression par exemple).

Le SOC et le SOH d'un accumulateur électrochimique ne peuvent pas être mesurés directement et sont calculés ou estimés selon différentes méthodes à partir d'autre grandeurs mesurables telles que le courant aux bornes de l'accumulateur, la pression interne à l'accumulateur, la température, la tension aux bornes de sortie de l'accumulateur ou encore l'âge de ce dernier.

La connaissance des grandeurs physiques au sein de l'accumulateur électrochimique à un instant t mais aussi tout au long de la vie de l'accumulateur est un facteur clé dans la maîtrise et la gestion de l'utilisation de celui-ci. Cela permet aussi de prédire et d'empêcher le cas échant les accidents en cas d'anomalie.

Parmi les solutions techniques proposées pour connaître les états de charge, de santé ou de sécurité des accumulateurs électrochimiques, on retrouve des solutions qui consistent à connaître la pression interne de la cellule. En effet, la connaissance de la pression interne d'une cellule, soit à un instant t, soit intégrée dans un historique propre à cet accumulateur, permet pour beaucoup des constituants d'électrode ou d'électrolyte d'estimer un ou plusieurs des états cités ci-dessus.

Pour la maîtrise de la durée de vie, la température étant un élément de premier ordre dans l'estimation de celle-ci, l'intégration d'un capteur de température à l'intérieur même de l'accumulateur montre tout son intérêt.

En outre, un système permettant l'identification de manière sûre de l'authenticité de l'accumulateur utilisé pourrait empêcher l'utilisation de batteries de moins bonne qualité dans des équipements.

Les demandes de brevet européen EP 2461172 A1 et EP 2224574 A1 décrivent une méthode et un système de détection de batteries conforme aux batteries d'origine qui enregistre les caractéristiques notamment de courant d'une batterie branchée à un appareil mobile et les compare à des caractéristiques de courant déjà enregistrées afin de déterminer si la batterie est conforme ou non.

La demande de brevet WO 2007/001129 A1 divulgue un système d'identification d'accumulateur. Ce système d'identification comporte une antenne et un circuit imprimé. L'ensemble se trouve à l'extérieur du boîtier de la cellule puisqu'intégré dans un assemblage formant une enveloppe avec capuchon de l'accumulateur.

La demande de brevet US 2011/0309995 décrit un accumulateur agencé dans un boîtier étanche. L'accumulateur est connecté à un circuit imprimé capable de stocker des données et à une antenne de type boucle. Le circuit imprimé et l'antenne boucle sont agencés à l'extérieur du boîtier et peuvent fonctionner selon le protocole RFID « radio-frequency identification » (dans la suite du texte, on utilisera l'acronyme anglais RFID).

La demande de brevet FR2953044 A1 divulgue un pack-batterie à deux systèmes d'identification. Un premier système est fixé à l'extérieur du boîtier contenant une cellule électrochimique sous une couche de protection et un deuxième système est fixé sur la couche de protection. Les systèmes sont par exemple des puces, qui peuvent notamment stocker des données, telles qu'un identifiant de la cellule.

La demande de brevet US 2005/0035738 décrit un système de vérification de pack-batterie comportant un capteur de température et une mémoire en lecture seule comprenant un numéro d'identification propre au pack-batterie.

La demande de brevet US 2003/0102842 décrit un système d'identification comprenant un capteur de température déclenchant l'arrêt de la batterie si celle-ci dépasse une valeur donnée et une puce d'identification extérieure aux boîtiers d'accumulateurs électrochimiques.

Le brevet US 5883493 se rapporte à un pack-batterie comprenant plusieurs accumulateurs et disposant d'une mémoire électronique extérieure au boîtier des accumulateurs électrochimiques. Cette mémoire électronique stocke des informations d'identification de la batterie et est capable d'enregistrer au cours du temps la capacité de charge maximale, le nombre de cycles, et d'autres caractéristiques du pack batterie telles que la température. Ces informations servent ensuite à piloter la batterie de la manière la plus efficace possible.

La demande de brevet JP 2013-92398 divulgue un procédé et un système de mesure du SOH d'accumulateurs électrochimiques. Les accumulateurs sont dotés de capteurs de pression et de capteurs de tension. Un circuit de contrôle extérieur au boîtier des accumulateurs compare les courbes de pressions et de tensions aux courbes originales enregistrées durant la production des accumulateurs afin de déterminer le SOH des cellules.

La demande de brevet JP 2012-243660 décrit un accumulateur électrochimique équipé d'un capteur de pression interne à son boîtier et d'une valve de sécurité configurée pour s'ouvrir à une pression prédéfinie, afin de décharger si besoin est une surpression interne au boîtier de l'accumulateur électrochimique. Le capteur de pression permet de savoir si la valve a été ouverte ou non et permet une prise de décision quant à l'arrêt ou non de l'accumulateur.

La demande de brevet CN 201868536 U se rapporte à un accumulateur électrochimique équipé d'un capteur de pression et d'une électrovanne contrôlée électroniquement, l'électrovanne pouvant être ouverte et fermée selon le besoin.

La demande de brevet US 2013/031318 divulgue un système de diagnostic d'un véhicule comportant un accumulateur électrochimique.

La demande de brevet EP 1 892 791 décrit un pack de batterie comprenant une batterie secondaire, le pack pouvant être connecté soit à un dispositif de charge soit à un dispositif de décharge. De l'information peut en outre être transmise entre le pack et le dispositif de charge ou de décharge.

Les systèmes d'identification connus sont agencés à l'extérieur du boîtier des accumulateurs électrochimiques. Ils peuvent ainsi être copiés de manière séparée, puis fixés à un accumulateur non-conforme aux spécifications de sécurité des accumulateurs d'origine.

Il existe ainsi un besoin de rendre les systèmes d'identification plus sûrs.

En outre, les systèmes communiquant par protocole RFID ne peuvent faire transmettre des informations sur une très courte distance. Les systèmes d'identification pour lesquels la communication ne s'effectue pas par ondes nécessitent l'emploi de fils supplémentaires. Chaque fil présentant un risque de défaillance propre, et ainsi l'emploi de fils multiples pour un accumulateur résulte en un risque de défaillance accru proportionnel au nombre de fils.

Ainsi, il existe un autre besoin de perfectionner encore les systèmes électroniques d'identification associés aux batteries et leurs moyens de communication afin de les rendre plus fiables.

L'invention permet de répondre, au moins partiellement, à ce(s) besoin(s).

### Résumé de l'invention

L'invention se rapporte à un procédé de communication selon la revendication 1, entre une électronique de commande et au moins un accumulateur électrochimique, l'accumulateur comportant au moins :
- une cellule électrochimique constituée d'au moins une anode et une cathode de part et d'autre d'un électrolyte,
- au moins deux bornes de sortie de courant reliée chacune à l'une ou l'autre de l'(des) anode(s) et de la (des) cathode(s),
- un premier boîtier contenant la(les) cellule(s) électrochimique(s) avec étanchéité,
- un second boîtier fixé à l'intérieur du premier boîtier en définissant en son sein un volume confiné étanche,
- un module électronique agencé dans ledit volume confiné étanche, le module électronique comportant au moins:
   - une mémoire,
   - un module de communication, adapté pour recevoir et/ou transmettre des données depuis et/ou vers l'extérieur du premier boîtier, un processeur,
   - un processeur, adapté pour recevoir et/ou transmettre au moins des données depuis et/ou vers le module de communication,
      le procédé comportant une étape d'échange de données entre l'électronique de commande et chaque accumulateur au moyen de chaque module de communication par courants porteurs en ligne de telle sorte que le courant en sortie de l' (des) accumulateur(s) électrochimique(s) transporte des données codées en un signal d'information, dans lequel soit :
   - l'électronique de contrôle est branchée en déviation aux bornes de sortie de chaque accumulateur électrochimique,
   - l'électronique de contrôle est reliée aux extrémités de la pluralité d'accumulateurs étant branchés en série, chaque processeur d'accumulateur effectuant une opération de modulation du signal d'information en entrée indifféremment de la modulation existante en amont ou sur un intervalle de temps propre à chaque accumulateur.

L'invention met ainsi à profit la communication par courants porteurs en ligne (acronyme français CPL) afin de pouvoir échanger de manière à la fois simplifiée et fiable des données à un haut débit directement sur la ligne porteuse du courant.

Un tel procédé est avantageux, car il permet de s'affranchir de fils supplémentaires pour la communication entre un accumulateur comportant des capteurs, c'est-à-dire un accumulateur qui possède des données à transmettre (par exemple les mesures des capteurs), et une électronique de commande.

En d'autres termes, l'électronique de commande est reliée à la ligne de transmission de la puissance électrique qui est également dans ce cas la ligne de transmission des données. Cela évite l'emploi d'un fil séparé pour la transmission des données.

La communication CPL est également plus avantageuse que la communication par des ondes par le biais d'une antenne telles que la RFID puisque sa portée est plus grande.

Enfin, l'absence de fils supplémentaires simplifie l'assemblage des pack-batteries puisqu'aucun branchement supplémentaire en plus du branchement des bornes de sortie de courant n'est nécessaire entre des différents accumulateurs des pack-batteries.

L'électronique de commande est par exemple celle d'un système de contrôle de batterie d'accumulateurs (en anglais, « Battery Management System », acronyme BMS), ou celle d'un pack-batterie comportant une pluralité d'accumulateurs électrochimiques.

Selon une première alternative, une pluralité d'accumulateurs sont branchés en série, l'électronique de commande étant branchée en dérivation aux bornes de sortie de chaque accumulateur électrochimique. Ce mode de réalisation s'appelle mode « boucle locale ». Par « boucle locale », on entend que chaque système formé par un accumulateur et l'électronique de commande forme une boucle. On qualifie cette boucle de locale car sa taille est réduite.

Selon une seconde alternative, une pluralité d'accumulateurs sont branchés en parallèle, l'électronique de commande étant reliée aux extrémités de la série.

On qualifie ce type d'architecture de « boucle globale » puisque plusieurs accumulateurs sont reliés en série entre eux et que l'électronique de commande est reliée aux extrémités de la série d'accumulateurs. En d'autres termes, l'électronique de commande est reliée à l'entrée du premier accumulateur et à la sortie du dernier accumulateur branché en série. Cette boucle contient au moins trois éléments, à savoir l'électronique de commande et au moins deux accumulateurs.

Avantageusement, chaque processeur d'accumulateur peut effectuer une opération de modulation du signal d'information en entrée, indifféremment de la modulation existante en amont. Par « indifféremment », on entend que le processeur de chaque accumulateur n'effectue pas d'opération de modulation suite à une lecture préalable du signal provenant à son entrée.

Chaque processeur d'accumulateur peut effectuer sur le courant porteur une opération de modulation du signal d'information en entrée sur un intervalle de temps propre à chaque accumulateur. En d'autres termes, chaque processeur est adapté pour effectuer un multiplexage temporel.

Selon un mode de réalisation avantageux, chaque accumulateur électrochimique branché en aval d'un autre accumulateur effectue une lecture des informations sur le courant porteur, et reportant sur le courant porteur en plus de son signal d'information les signaux d'informations en amont.

Avantageusement, le signal d'information peut transporter des données choisies parmi : la position de chaque accumulateur et/ou un identifiant de chaque accumulateur et/ou la température et/ou la pression au sein du premier boîtier de chaque accumulateur et/ou la tension aux bornes de sortie de courant de chaque accumulateur et/ou le courant de sortie de chaque accumulateur et/ou l'état de santé et/ou l'état de charge de chaque accumulateur et/ou l'historique d'état de santé et/ou d'état de charge et/ou de pression au sein du premier boîtier et/ou de température et/ou de courant de sortie et/ou de tension aux bornes de sortie de courant.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :
- la figure 1 est une vue en coupe d'un accumulateur selon l'invention,
- la figure 2 est une vue en coupe rapprochée du couvercle d'un accumulateur selon l'invention,
- la figure 3 une vue en perspective rapprochée du couvercle selon une variante de l'invention,
- la figure 4 est une vue en coupe et en perspective montrant l'intérieur du module intelligent selon l'invention,
- la figure 5 est un schéma de principe de l'accumulateur selon l'invention,
- les figures 6A et 6B montrent sous forme de la correspondance entre état de charge et état de tension pour des cellules électrochimiques de différente nature,
- la figure 6C montre sous forme de courbes la pression en fonction de l'état de charge pour des cellules ayant subi un nombre de cycles différents,
- la figure 7 est un schéma de principe de détermination du SOC selon l'invention,
- la figure 8 représente la distribution de pression pour une population de cellules et une méthode de sélection de cellules fiables,
- la figure 9 représente l'évolution de la capacité effective d'un accumulateur en fonction de la pression interne au premier boîtier au cours de la vie de cet accumulateur,
- la figure 10 représente sous forme de courbe le SOH en fonction de la pression interne au premier boîtier,
- la figure 11 représente une opération de modulation effectuée par CPL,
- les figures 12 et 13 représentent le schéma de fonctionnement d'un module interne selon l'invention par ondes ou par CPL,
- les figures 14A et 14B illustrent le fonctionnement d'un pack-batterie en boucle locale ou en boucle globale conformément à l'invention,
- les figures 15A et 15B illustrent la transmission du signal selon qu'il y ait ou non lecture puis report du signal par les accumulateurs successifs branchés en série.

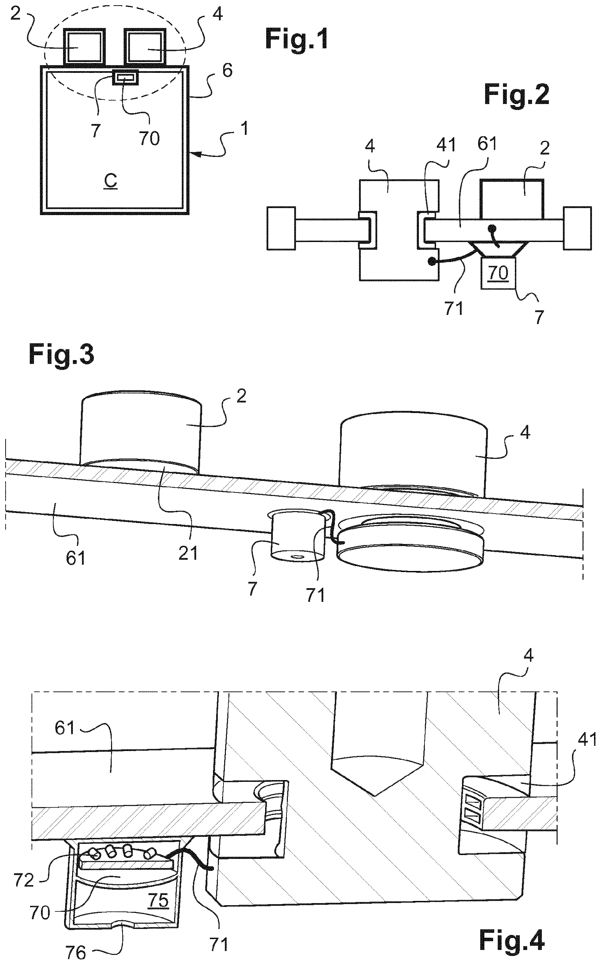

La figure 1 représente un accumulateur électrochimique 1 selon un mode de réalisation de l'invention. Cet accumulateur électrochimique 1 comporte un boîtier 6 et deux bornes de sortie de courant 2 et 4. A l'intérieur du boîtier 6 est agencée de manière étanche une cellule électrochimique C. Un second boîtier 7 est agencé à l'intérieur du boîtier 61. L'intérieur du boîtier 7 définit un volume confiné étanche 70.

Les figures 2, 3 et 4 illustrent plus en détail l'accumulateur 1 et particulièrement le second boîtier 7.

Dans ce mode de réalisation, le boîtier 6 est métallique, par exemple en alliage d'aluminium, et la cellule C est une cellule électrochimique au lithium.

On peut ainsi voir en figure 2 que le premier boîtier 6 de l'accumulateur est fermé de manière étanche par un couvercle 61. Une première borne de sortie de courant 2 est fixée au couvercle 2 au moyen d'une soudure laser 21. Le couvercle est relié à l'électrode positive de la cellule électrochimique C. Ainsi, la borne de sortie de courant 2 constitue le pôle positif de l'accumulateur électrochimique 1.

La deuxième borne de sortie de courant 4 est une borne traversant le couvercle 61. Un joint 41 isole électriquement la borne de sortie de courant 4 du couvercle métallique 61 qu'elle traverse. La deuxième borne de sortie de courant 4 est reliée à l'électrode négative de la cellule électrochimique C. La borne de sortie de courant 4 constitue ainsi le pôle négatif de l'accumulateur électrochimique 1.

Le second boîtier 7 abrite dans son volume confiné étanche 70 un module électronique 72. Dans ce mode de réalisation, le second boîtier 7 est métallique et soudé au couvercle 6. D'autres modes de fixation sont envisageables tels que le collage, le rivetage, le clipsage, le surmoulage ou toute autre technique adaptée pour fixer le second boîtier au premier. Dans ce cas, le premier et le second boîtier sont tous deux métalliques, mais ils peuvent également être dans d'autres matériaux, par exemples plastiques. Le mode de fixation peut ainsi être adapté en fonction du matériau.

La soudure du second boîtier métallique 7 au couvercle métallique 61 permet d'effectuer la liaison électrique entre l'électrode positive de la cellule électrochimique C et le second boîtier 7. Le module électronique 72 est ensuite relié par un fil non représenté au second boîtier 7. Le module électronique 72 est ainsi relié électriquement à l'électrode positive de la cellule électrochimique C.

Un fil 71 relie de même la partie inférieure de la borne de sortie de courant 4, c'est-à-dire la partie de la borne de sortie de courant 4 se trouvant à l'intérieur du boîtier 6, au module électronique 72. Le module électronique est ainsi relié électriquement à l'électrode négative de la cellule électrochimique C. Il convient également de noter que le fil 71 est isolé électriquement du boîtier 70 et que le fil 71 traverse le boîtier 70 de manière étanche.

Le module électronique 72 est alimenté directement par la cellule électrochimique C grâce à ses connexions à l'électrode positive et à l'électrode négative de la cellule électrochimique C.

Selon le mode de réalisation de l'invention représenté en figure 4, le boîtier 7 comporte un prolongement creux 75 débouchant sur l'intérieur du boîtier électrochimique 6 par un orifice de rentrée de gaz et/ou de liquide 76. Ce prolongement creux 75 comporte un capteur de pression (non représenté) relié au processeur du module électronique 72. En variante, il est également possible d'avoir un capteur de pression à l'extérieur du second boîtier 7 relié au processeur du module électronique 72 par un fil.

Dans le mode de réalisation représenté en figure 4, un capteur de température est agencé au sein du volume confiné étanche 70 et est relié au processeur du module électronique 72. En variante, le capteur de température (non représenté) peut être disposé à l'extérieur du second boîtier 7, et relié au processeur du module électronique 72 par un fil.

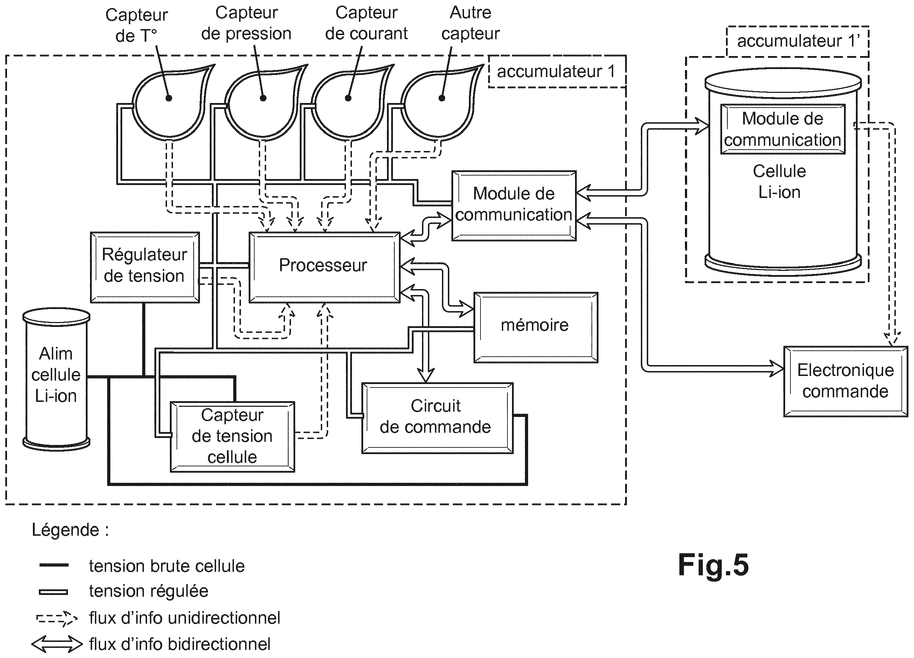

On a représenté en figure 5, le fonctionnement d'un accumulateur électrochimique selon l'invention. Le module électronique 72 est relié aux deux électrodes de la cellule électrochimique C au travers d'un régulateur de tension. Le module électronique 72 est doté d'un capteur de courant et/ou d'un capteur de tension de la cellule C. Plus précisément, le capteur de courant est relié au processeur du module électronique 72 qui est lui-même alimenté par la cellule.

Le processeur du module électronique 72 reçoit des données provenant des capteurs de température, de pression, de courant et/ou de tension et éventuellement d'un ou de plusieurs capteurs de déformation (jauge de contrainte) collé(s) sur la paroi du boitier 6 d'accumulateur. Le processeur peut également enregistrer et lire des données contenues dans une mémoire. Les mesures des différents capteurs peuvent ainsi être enregistrées et conservées dans le temps, créant ainsi un historique de température, de pression, de courant et de tension. D'autres valeurs peuvent aussi être enregistrées après avoir été calculées, par exemple par le processeur, tels que le SOC, le SOH ou encore l'état de sécurité.

Le processeur est également relié à un module de communication et échange des données avec ce dernier. Le module de communication peut comporter une antenne et communiquer par ondes. Le module de communication peut également être relié aux bornes de sorties de courant et communiquer en CPL.

Comme représenté en figure 5, le module de communication peut communiquer avec un accumulateur voisin 1' ou avec une électronique de commande d'un pack-batterie.

La mémoire peut contenir un numéro d'identifiant de la cellule et le cas échéant, sa position spatiale dans un pack-batterie. Elle peut également contenir une clé de sécurité ou un programme de sécurité anti-fraude afin de pouvoir authentifier l'accumulateur et ainsi prémunir contre l'utilisation de batteries non conformes.

Enfin, le module électronique comporte un circuit d'équilibrage qui est adapté pour avoir une action d'équilibrage sur la cellule électrochimique C. Ce circuit comporte par exemple une résistance permettant à la cellule de se décharger en faisant circuler un faible courant dans la résistance. Le processeur peut transmettre des instructions reçues de l'électronique de commande au circuit d'équilibrage. Le circuit d'équilibrage est ainsi piloté par l'électronique de commande.

### Exploitation des données

Le module électronique dispose de données qui sont:
des données « fixes » enregistrées dans la mémoire (par exemple : identifiant, clé de sécurité, position, programme de sécurité, type d'électrochimie), des données « instantanées » provenant des différents capteurs (température, pression, courant, tension), des historiques de données issues de ces capteurs enregistrés dans la mémoire, des données communiquées par le module de communication, et des historiques de données communiquées par le module de module de communication enregistrées dans la mémoire.

Ces données ne sont pas nécessairement toutes présentes dans la mémoire, on peut ne se servir que de certaines données selon l'électrochimie de la cellule électrochimique ou encore selon les capteurs dont est doté l'accumulateur.

D'autres données peuvent également être calculées à partir des données instantanées, des historiques ou des données communiquées. Ces données peuvent être le SOC, le SOH, l'état de sécurité ou encore l'énergie fournie par la cellule, le nombre de cycles que la cellule a effectué ou encore l'âge de l'accumulateur électrochimique.

Certaines des données enregistrées dans la mémoire peuvent être mesurées par les capteurs durant la fabrication de l'accumulateur, par exemple durant le premier cyclage de l'accumulateur (cycle comprenant une charge et une décharge).

Parmi les données importantes, on trouve par exemple: la température instantanée, disponible grâce au capteur de température, les températures maximum et minimum de l'historique de température, la pression instantanée disponible grâce au capteur de pression situé dans le module, les pressions maximum et minimum de l'historique de pression, l'énergie fournie par la cellule sur une période définie (sur une période prédéterminée ou depuis le début de la vie de la cellule par exemple), la tension et le courant instantanée de la cellule.

Les données mesurées peuvent par exemple parvenir à l'électronique de commande d'un système de contrôle de batterie d'accumulateurs (en anglais, « Battery Management System », acronyme BMS), qui intègre un organe de sécurité. Ce dernier a pour fonction notamment de couper le courant en cas de valeurs anormales.

La connaissance de la température de la cellule électrochimique au moyen d'un capteur de température est un élément primordial pour une utilisation de la cellule électrochimique. On peut utiliser la température pour par exemple prédire la durée de vie de l'accumulateur, limiter son utilisation en cas de situation dans des plages de température inadéquates (exemple: limitation de la charge en cas de basse température ou arrêt du système au-delà d'une certaine température) ou encore se prémunir d'éventuels dysfonctionnements détectables par un capteur de température (exemple : dégradation d'une liaison inter-cellules électrochimiques provoquant un échauffement en cas de passage de fort courant).

Une autre donnée très importante est la pression. La connaissance de la pression interne au premier boîtier 6 est source de nombreuses informations.

En connaissant la pression interne au boîtier 6, soit de manière instantanée, soit en se basant sur un historique de pression et la valeur instantanée, il est possible d'avoir accès à de précieuses informations.

La pression interne peut par exemple être utilisée comme alarme de fonctionnement. Au-delà d'une certaine valeur de pression interne, cela signifie que la cellule rentre en fin de vie. Cela peut aussi être une information indiquant un dégazage plus rapide que normal. Par exemple, dans le cas d'un début de micro court-circuit, les cellules électrochimiques peuvent produire un dégagement gazeux plus important qu'en utilisation normale.

Ainsi, en surveillant la valeur de pression ou son évolution au cours du temps, il est possible de prévenir un court-circuit amenant vers un emballement thermique par exemple. La pression peut donc indiquer le SOH mais aussi l'état de sécurité au travers de différentes approches. D'autres approches de détermination du SOH ou de l'état de sécurité sont également possibles.

Lors de la fabrication des accumulateurs électrochimiques, les étapes de formation de la cellule électrochimique et de premier cyclage génèrent un volume de gaz qui dépend de nombreux facteurs. A partir de la pression interne au boîtier, il est possible d'identifier certains accumulateurs comme étant défectueux ou moins viables. En effet, un dégagement de gaz supérieur à une valeur prédéterminée peut par exemple indiquer une composition d'électrolyte non conforme avec un contenu d'eau supérieur à une valeur prédéterminée, ou encore que trop d'électrolyte a été versé.

Dans tous les cas, l'utilisation dans un pack-batterie d'un accumulateur contenant une cellule électrochimique présentant un défaut n'est pas recommandée. Cet accumulateur électrochimique présentera sans doute des performances bien inférieures à celles attendues, avec une durée de vie courte, ou de l'autodécharge par exemple. Cette baisse de performances se répercute directement sur l'ensemble du pack-batterie.

La pression peut donc être aussi un indicateur des futures performances d'une cellule et peut servir dans un cycle de production de produits à discriminer les produits les moins performants.

La pression interne d'un accumulateur électrochimique peut aussi parfois varier en fonction du SOC. En connaissant la pression, il est possible d'estimer le SOC grâce à un profil propre à chaque électrochimie. La pression peut donc être un indicateur du SOC.

Les différents aspects du contrôle de l'état des batteries (état de charge, état de santé et de sécurité, ainsi que la fiabilité lors de la manufacture) sont détaillés ci-après.

### Détermination de l'état de charge

Le SOC d'un accumulateur est une donnée de premier plan dans la gestion de son utilisation. Il indique la quantité d'énergie encore disponible et de ce fait l'autonomie par exemple pour les équipements électriques comme les véhicules, les téléphones ou encore les systèmes de secours. L'autonomie restante est une donnée que l'utilisateur souhaite connaitre à tout moment. Dans le cas d'un véhicule par exemple, cela lui permet de savoir la distance qu'il peut encore parcourir, et d'ajuster éventuellement sa stratégie de déplacement et/ou de recharge. Une mauvaise connaissance du SOC a des conséquences importantes sur la stratégie d'utilisation de l'énergie disponible. Toujours dans le cas d'un véhicule, si l'autonomie annoncée est inférieure à l'autonomie réelle, le risque de manquer d'énergie pour effectuer la fin du parcours prévu est avéré.

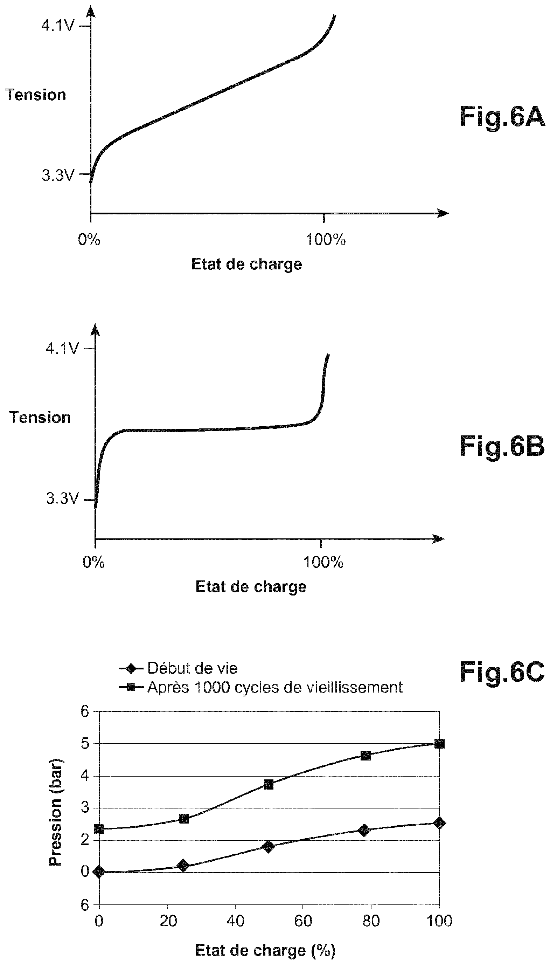

Pour un certain nombre de couples électrochimiques d'électrodes, la courbe de tension en circuit ouvert permet aisément de connaitre le pourcentage de capacité disponible car elle est bijective. A une tension spécifique de la cellule correspond donc un unique état de charge. C'est le cas des cellules électrochimiques à base de NCA/Graphite (NCA : Nickel Cobalt Aluminium) dont la courbe de charge en fonction de la tension est représentée en figure 6A.

Pour d'autres électrochimies d'électrodes, il est impossible de connaitre l'état de charge en lisant uniquement la tension. C'est le cas par exemple du couple électrochimique LFP/LTO (LFP : acronyme anglais pour Lithium Fer Phosphate, et LTO : acronyme anglais pour Lithium Titanate) dont la courbe de charge en fonction de la tension est représentée en figure 6B. Il y a un important palier dans cette courbe qui empêche pour une tension donnée de connaitre la SOC.

Dans ce cas, il est plus aisé d'utiliser la pression comme indicateur du SOC.

Un ensemble de mesures de pression est nécessaire afin d'établir une courbe de référence de base utilisée dans la détermination du SOC (à une pression mesurée correspond un état de charge). Etant donné que la plupart des électrochimies génèrent du gaz de façon non réversible au fur et à mesure des cycles de charge et de décharge successifs, il n'est pas possible d'établir une unique courbe de référence fixe. De plus, certaines électrochimies peuvent avoir des courbes représentant la pression en fonction de l'état de charge qui ne sont pas bijectives (à une information de pression peuvent correspondre deux états de charge).

Dès lors, il suffit de compléter la pression instantanée par un historique de pression afin de pouvoir ajuster les courbes de référence indiquant l'état de charge en fonction de la pression comme représenté en figure 6C.

Afin de choisir la bonne courbe pression/SOC, la stratégie à employer est de mesurer la pression lorsque l'accumulateur est chargé à une valeur montrant une caractéristique spécifique permettant d'identifier clairement l'état de charge. Dans la plupart des cas, il est possible d'utiliser un moyen alternatif à la pression pour détecter un état 100% chargé ou 0% chargé. Par exemple, pour les courbes de tension en fonction de l'état de charge qui ont un profil intégrant un grand plateau (comme en figure 6B), la plupart du temps, les deux extrémités de SOC ont une tension différente du plateau (figure 2). On peut donc utiliser la tension comme détection du des plages proches de 100% ou de 0% de charge.

A ce point particulier de SOC, on mesure la pression. On vient alors choisir dans les historiques une courbe du SOC en fonction de la pression correspondant à notre état de cellule (indexé particulièrement sur le vieillissement, voir figure 6C).

Il est à noter qu'il est possible que ce choix soit à moduler également en fonction de la température du système. En effet, la pression des cellules peut varier en fonction de la géométrie, des matériaux employés et de l'électrochimie de l'accumulateur considéré, et ce même si l'état de charge ne change pas. Cela est dû aux dilatations thermiques différentielles des matériaux utilisés pour fabriquer une telle cellule. Une mesure de température est ainsi avantageuse car elle permet de renforcer la précision de la mesure du SOC.

Il convient de noter que pour des accumulateurs Li-ion, les matériaux des électrodes se dilatent ou se contractent selon qu'ils aient reçu ou libéré des ions lithium. En d'autres termes, les matériaux se dilatent en fonction du SOC. Le coefficient d'expansion volumique y est défini comme le volume de la maille lithiée divisé par le volume de la maille délithiée.

Les tableaux suivants donnent les valeurs des expansions volumiques pour différents matériaux (y) et pour différents types de cellules (R).

| Matériau d'électrode | Capacité (mAh/cm³) | Volume matériau lithié /Ah (cm³) | Volume matériau délithié /Ah (cm³) | y |
|---|---|---|---|---|
| LiFePO₄ (LFP) | 558 | 1.792 | 1.659 | 1.08 |
| LiNi_{0.33}Mn_{0.33}Co_{0.33}O₂ (NMC) | 750 | 1.333 | 1.294 | 1.03 |
| Graphite (G) | 788 | 1.269 | 1.154 | 1.10 |
| Silicium-Carbone (SiC) | 2300 | 0.434 | 0.217 | 2.0 |

| Cellule Li-ion | V1=Volume cellule chargée /Ah (cm³) | V2=Volume cellule déchargée /Ah (cm³) | R =V1/V2 |
|---|---|---|---|
| LFP-G | 2.928 | 2.946 | 0.994 |
| NMC-G | 2.564 | 2.487 | 1.031 |
| LFP-Si | 2.094 | 2.010 | 1.042 |
| NMC-Si | 1.729 | 1.551 | 1.115 |

Dans le cas d'une cellule LFP-G d'une capacité de 17 Ah, une variation de 0,1 bar peut être mesurée, malgré la faible expansion volumique R. On en déduit que cette méthode est applicable pour les autres accumulateurs Li-ion.

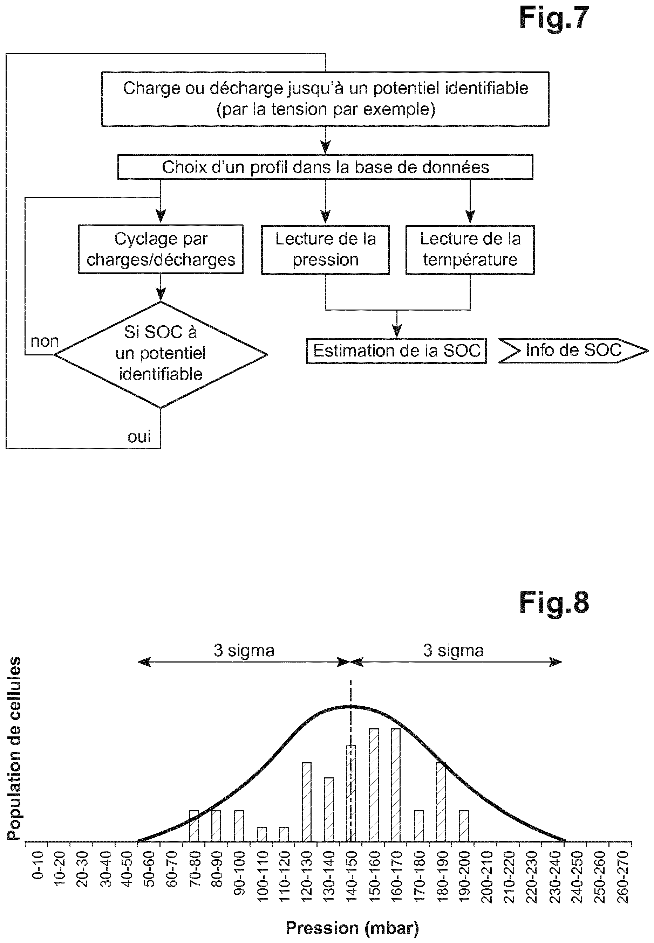

L'organigramme du procédé d'estimation du SOC est représenté en figure 7. Par base de données, on entend un ensemble d'historiques de différentes données.

Pour la constitution de la base de données, deux méthodes sont proposées.

La première méthode demande une caractérisation suffisante de la cellule électrochimique avant de pouvoir utiliser la méthode décrite dans ce document. Il faut alors au moment du développement de la cellule réaliser des enregistrements de pression à différentes températures, différents états de santé, et différents états de charges afin de pouvoir constituer la base de données. Avec toutes ces données, on constitue alors une base intégrée dans le module électronique de l'accumulateur électrochimique et utilisée dès le début de la vie de nouvelles cellules tel que décrit précédemment.

La seconde méthode est basée sur de l'autoapprentissage. En effet, il n'est pas nécessaire de prévoir une caractérisation initiale dans différentes configurations. On utilise les enregistrements réalisés sur chaque cellule au fur et à mesure de sa vie et on complète petit à petit la base de données.

L'inconvénient de la seconde méthode est que dans les premières parties de la vie de la cellule, la précision du SOC sera moins importante qu'avec la première méthode. Par contre, au fur et à mesure de la vie de la cellule, la base se renforçant, la précision sur la SOC grandit.

Une dernière solution peut consister à combiner ces deux méthodes afin de cumuler les avantages: une base utilisable dès le début de la vie de la cellule, et complétée au fur et à mesure de la vie de l'accumulateur électrochimique. La base devient ainsi de plus en plus précise.

Ainsi, lors du choix du profil, on peut ainsi soit faire l'hypothèse que la base de données est assez complète et directement lire la pression et la température pour estimer le SOC, soit refaire un cycle de charge et de décharge dans des conditions de température données afin de préciser la base de données, soit les deux.

### Détermination de l'état de santé

L'étude des mécanismes de vieillissement d'une batterie est très complexe, dans la mesure où les causes du vieillissement sont multiples. Les mécanismes de vieillissement se produisent soit pendant les phases d'usage de l'accumulateur (vieillissement en cyclage), soit pendant les phases de repos (vieillissement calendaire).

La connaissance de l'état de santé d'un accumulateur électrochimique est primordiale car elle témoigne à la fois de son aptitude à satisfaire à l'application et de sa sécurité intrinsèque. L'état de santé est ainsi intimement lié à l'état de sécurité.

Un accumulateur électrochimique en mauvaise santé ne sera pas apte à stocker ou délivrer l'énergie attendue et pourra être potentiellement dangereux en cas de défaillance critique.

Les conséquences du vieillissement sont souvent analysées dans la littérature pour introduire des systèmes de mesures qui permettent à termes de donner l'état de santé d'un accumulateur électrochimique. Ces mesures sont typiquement la mesure de la résistance de la cellule Li-ion par spectroscopie d'impédance ou par pulse de courant durant le cyclage, la mesure de la tension de la cellule, ou encore la mesure de la capacité de la cellule.

On peut aussi mesurer la déformation d'emballage ou de boîtiers rigides consécutifs à une expansion volumique interne.

Les données mesurées lors des vieillissements prématurés d'un accumulateur au lithium (forte résistance, forte tension ou faible capacité) traduisent avec un temps de retard la passivation des électrodes en surface, la mauvaise diffusion des ions lithium dans les électrodes en raison d'une trop faible porosité des électrodes, la dégradation de l'électrolyte (présence d'eau ou tension trop élevée), une perte d'étanchéité du boîtier, des mauvaises soudures, un séparateur dégradé, ou encore une décohésion des électrodes.

Dans le cas d'un pack-batterie, le BMS intègre ainsi un organe de sécurité qui coupe le courant en cas de valeurs anormales enregistrées. Inévitablement, plus la détection de l'accumulateur défaillant intervient tôt, plus celui peut être rapidement écarté du circuit de fabrication.

Malheureusement, les mesures électriques énoncées ci-dessus sont majoritairement réalisées lors de la vie de l'accumulateur électrochimique alors qu'il est déjà assemblé en pack-batterie et la détection tardive de valeurs anormales entraîne un arrêt immédiat du module pour éviter les emballements thermiques menant à des explosions.

Le module électronique selon l'invention permet la mesure de la pression interne au premier boîtier et propose ainsi une méthode de détermination de l'état de santé d'un accumulateur, en amont de celle utilisées usuellement. Cette méthode va permettre d'appréhender les dégradations internes en permettant par exemple une libération préliminaire des gaz ou encore d'écarter l'accumulateur électrochimique défaillant plus en amont.

Comme déjà indiqué, un capteur de pression interne peut être intégré au module électronique de l'accumulateur. Pour un état de charge donné, la pression interne augmente de manière monotone au cours du vieillissement, si bien qu'il est possible de prédire la durée de vie restante de l'accumulateur à partir de sa mesure de pression. En effet le vieillissement génère des réactions parasites au sein de l'élément qui forment du gaz et augmente sa pression. A chaque cycle les électrodes subissent également une expansion/contraction volumique générant une augmentation/diminution de pression cyclique. Cet effet mécanique n'est pas complètement réversible, si bien que le volume libre se réduit au cours du vieillissement à l'intérieur de la cellule et sa pression augmente, notamment dans le cas des accumulateurs électrochimique au lithium.

Il existe aussi une pression limite à ne pas dépasser pour maintenir l'intégrité du boitier, qui peut définir un critère de fin de vie d'un accumulateur électrochimique.

On peut également envisager un dégazage pour relâcher la pression accumulée et prolonger la durée de vie de l'élément. Par exemple, on peut agir en cours de fabrication à l'aide d'un bouchon amovible qui sera par la suite remplacé par le rivet de fermeture définitif, ou pendant une maintenance périodique si ajout d'une vanne sur l'élément.

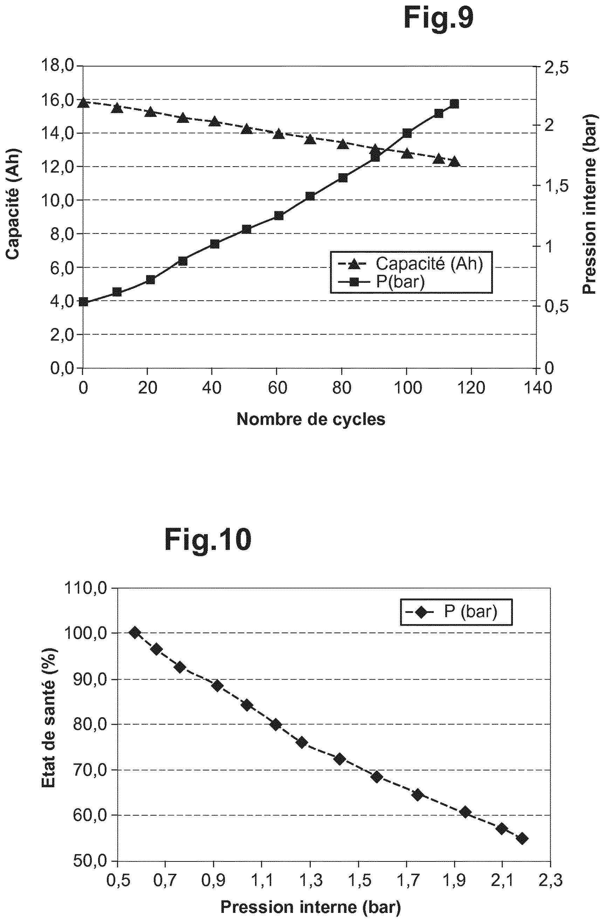

On a représenté en figure 9 l'augmentation monotone de pression due aux effets irréversibles et une baisse de capacité pour un accumulateur électrochimique cylindrique de couple électrochimique LiFePO4-graphite de 16Ah. On fait subir à l'accumulateur des cycles de charge décharges à un régime de 1C (I=16A). Il est alors possible de relier la capacité ou la résistance au niveau de pression interne, ce qui permet d'évaluer un état de santé.

Il est par ailleurs souhaitable pour plus de précision de se placer à un état de charge et une température connus pour améliorer la précision de la détermination de l'état de santé.

En effet, la pression interne varie faiblement avec la température (en suivant en première approximation la loi des gaz parfaits, variation de pression de 0.3% par °C dans l'exemple). On peut par exemple aisément ajouter un thermocouple sur un accumulateur électrochimique ou un ensemble d'accumulateurs électrochimiques.

La mesure de pression pouvant être faite en statique (hors utilisation), la température d'ambiance pour un pack batterie complet peut suffire dans certains cas pour connaitre la température de chaque accumulateur. Dans certains autres cas, si la mesure de température ambiante s'avère insuffisante pour caractériser la température locale, alors on réalise une mesure locale au niveau de chaque accumulateur.

D'autre part la pression varie avec l'état de charge, comme on peut l'observer en figure 6C. Se placer à un état de charge fixé permet d'augmenter la précision sur l'état de santé.

Si on définit l'état de santé S de la cellule de capacité initiale Qini et de capacité Q selon la formule suivante : S=100(2xQ/Qini -1), on obtient l'abaque de la figure 10.

Les conditions pour l'abaque de la figure 10 ont été choisies telles que la pression interne est celle à 50% du SOC et que la température est de 25°C.

### Détermination de la fiabilité d'une cellule

Jusqu'à présent, pour fiabiliser la production de batteries, un certain nombre de paramètres propres à la cellule étaient contrôlés en sortie de formation pour avérer de la qualité.

On peut répertorier dans un premier temps quelques critères individuels (propres à chaque cellule) tels que la capacité de la cellule (en charge et ou en décharge), la résistance interne de la cellule électrochimique (le plus souvent résistance mesurée avec un pic de courant ou résistance mesurée en haute fréquence), l'auto-décharge (perte de capacité sur une période donnée), ou les dimensions et l'aspect de l'accumulateur électrochimique.

Les accumulateurs électrochimiques sont aussi évalués par prélèvement. Un certain nombre d'accumulateurs électrochimiques sont extraites des lots de fabrication et testées pour vérifier différents critères (cette évaluation étant destructive, elle ne peut pas être faite sur 100% de produits) comme par exemple la durée de vie (à une ou plusieurs températures) suivant un ou plusieurs régimes de charge/décharge ou le comportement en tests abusifs (court-circuit, surcharge)

Afin d'augmenter encore la fiabilité des accumulateurs électrochimiques au lithium, on peut utiliser un comportement propre à tout accumulateur lithium-ion qui apparait initialement pendant la formation électrique: le dégazage. En effet, lors de la formation électrique (les premiers cycles de charge et de décharge), les électrodes réagissent avec l'électrolyte et les régimes de courants imposés, et génèrent du gaz. Ce phénomène apparaît aussi dans des accumulateurs lithium polymère.

En suivant statistiquement cette formation de gaz, il est possible de détecter pendant la production de l'accumulateur électrochimique des comportements anarchiques qui révèlent des risques quant à l'utilisation de certaines de celles-ci dans des produits. Ce processus permet ainsi de distinguer les accumulateurs viables de ceux qui ne le sont pas.

La présente invention permet la détermination de la viabilité de cellules pendant les phases de production situées entre le remplissage d'électrolyte et la mise à disposition pour utilisation ou mise en pack-batteries.

La pression interne à l'accumulateur est l'information centrale utilisée dans l'invention. Celle-ci permet de faire le tri entre les accumulateurs viables et les autres.

La méthode de détermination se base sur la connaissance de cette pression.

Pour évaluer chaque accumulateur individuellement, on utilise plus spécifiquement la pression du gaz après la formation électrique, c'est-à-dire après que l'on est réalisé la cellule électrochimique. Cela peut être la pression juste après l'étape de formation, mais aussi beaucoup plus tard, après une étape de stockage prolongé par exemple (cette étape est souvent utilisée pour vérifier l'autodécharge des accumulateurs).

La pression individuelle de chaque accumulateur doit être alors comprise entre un maximum et un minimum spécifiés.

Ces deux limites sont établies sur la base d'une population réputée saine de cellules. On forme alors une représentation statistique de la pression à un instant t. Cette population nous donne les maximum et minimum de pression acceptable suivant une règle à établir. Un premier exemple de règle peut être le transfert des limites existantes en limites pour la production. Ainsi :
- le minimum de la pression interne de la population saine est le minimum acceptable, et
- le maximum de la pression interne de la population saine est le maximum acceptable.

On peut également décider d'une règle sur un plan plus statistique :
- la moyenne de la pression de la population saine + 3 sigma est le maximum acceptable, et
- la moyenne de la pression de la population saine - 3 sigma est le minimum acceptable, sigma étant l'écart type de la pression de la population saine.

Cette méthode est représentée en figure 8.

Pour être déclarée viable, chaque accumulateur testé doit avoir sa pression comprise entre le minimum acceptable et le maximum acceptable, car une pression interne trop faible ou trop forte est un signe que l'accumulateur présente un défaut.

La cause d'une pression interne de l'accumulateur au minimum peut être :
- une fuite: dans ce cas, l'électrolyte de la cellule électrochimique sera petit à petit contaminé et la tenue en vieillissement de la cellule électrochimique ne sera pas bonne,
- un défaut de remplissage : la quantité d'électrolyte insérée est trop faible. Cela peut impacter la durée de vie, mais aussi le comportement en sécurité de la cellule si le volume mort est important en cas de situation abusive (le volume mort est un volume de la cellule laissé volontairement sans électrolyte),
- un défaut ou manque d'un composant à l'intérieur de la cellule ou défaut sur les électrodes (porosité, épaisseur...).

Une pression supérieure au maximum peut être liée à :
- un défaut de remplissage : la quantité d'électrolyte insérée est trop importante. Le volume mort de la cellule s'en trouve diminué et des conséquences néfastes peuvent apparaitre en cas de situation abusive,
- une pollution de l'électrolyte ou des électrodes : des polluants (comme de l'eau par exemple) se trouvent en trop grande quantité dans la cellule, générant plus de gaz lors de la formation. Cela est un bon indice que les performances de la cellule sur le long terme ne seront pas bonnes, par exemple que la durée de vie va se raccourcir, ou
- un défaut sur les électrodes (porosité, épaisseur...).

Il faut noter que cette méthode peut être utilisée avec un capteur apte à mesurer la pression interne au premier boîtier qu'il soit agencé à l'intérieur ou à l'extérieur du premier boîtier.

### Communication des données par CPL

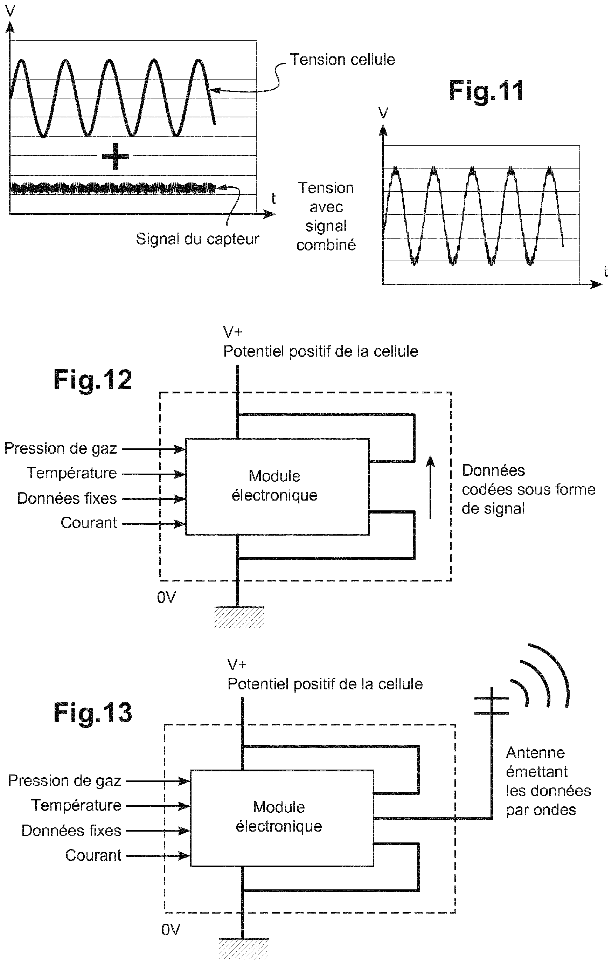

Le principe de la transmission de données par CPL est illustré en figure 11. On superpose à la tension d'une cellule, un signal de plus haute fréquence et de faible énergie. Ce signal se propage sur la ligne électrique et peut être reçu et décodé à distance.

Ainsi, au lieu de communiquer les données par ondes comme représenté en figure 13, un accumulateur doté d'un module électronique peut, selon le procédé de l'invention, communiquer des données directement sur le courant de sortie de l'accumulateur.

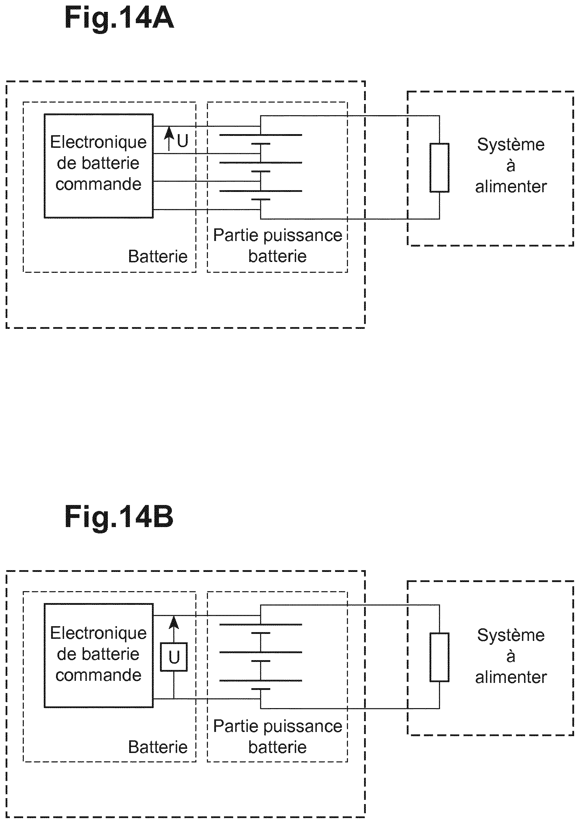

Ce procédé est mis en oeuvre avantageusement dans le cadre de la communication de données d'un accumulateur vers une électronique de commande. L'électronique de commande est en effet reliée aux bornes de sorties de courant d'un accumulateur, soit directement, soit indirectement. La communication CPL a pour avantage de pouvoir se faire soit directement vers une électronique de commande, soit à travers un ou plusieurs accumulateurs branchés en série. Ces deux modes de réalisations, dits respectivement « boucle locale » et « boucle globale », sont illustrés en figures 14A et 14B.

L'électronique de commande lit ainsi la tension U soit individuellement aux bornes de chaque accumulateur, soit collectivement aux bornes d'une série d'accumulateurs.

Si l'électronique de commande lit la tension individuellement aux bornes de sortie de courant de chaque accumulateur électrochimique (mode boucle locale) il n'est pas nécessaire d'adapter chaque module électronique de chaque accumulateur électrochimique pour lire un signal CPL. La simple émission suffit.

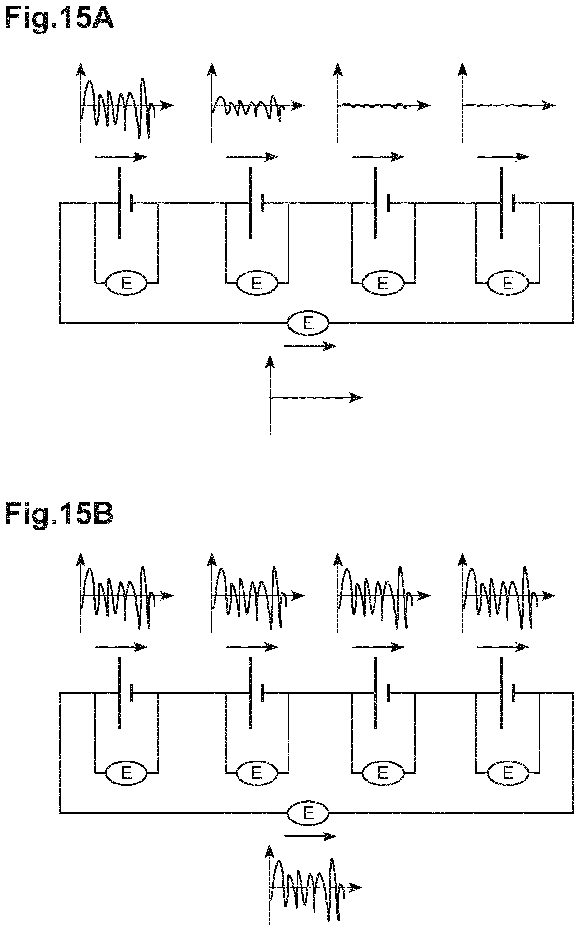

Selon le mode en boucle globale, au-delà d'un certain nombre d'accumulateur en série, il peut devenir nécessaire de tenir compte de l'atténuation en fréquence due à la traversée par le signal d'un accumulateur. Chaque accumulateur successif agit comme un filtre ayant une caractéristique propre et cela résulte en une atténuation du signal initial (voir figure 15A).

Ainsi, il peut être avantageux que chaque accumulateur électrochimique lise et réémette les données reçues de l'accumulateur précédent, en y superposant sa propre opération de modulation. Cette opération peut se faire en multiplexage temporel (émission de données sur des plages temporelles différentes pour chaque accumulateur) ou non. La modulation du signal CPL peut se faire selon toute méthode de modulation CPL connue de l'homme du métier (modulation d'amplitude et de fréquence).

La communication par CPL permet avantageusement de s'affranchir de la connexion de fils supplémentaire reliant l'électronique de commande aux différents capteurs de chaque accumulateur.

D'autres variantes et améliorations de l'invention qui vient d'être décrite peuvent être envisagées sans pour autant sortir du cadre de l'invention définie par les revendications.

## Revendications

1. Procédé de communication entre une électronique de commande et une pluralité d'accumulateurs électrochimiques, chaque accumulateur comportant au moins :
• une cellule électrochimique (C) constituée d'au moins une anode et une cathode de part et d'autre d'un électrolyte,
• au moins deux bornes de sortie de courant (2, 4) reliées chacune à l'une ou l'autre de l'(des) anode(s) et de la (des) cathode(s),
• un premier boîtier (6) contenant la(les) cellule(s) électrochimique(s) avec étanchéité,
• un second boîtier (7) fixé à l'intérieur du premier boîtier en définissant en son sein un volume confiné étanche (70),
• un module électronique (72) agencé dans ledit volume confiné étanche (70), le module électronique (72) comportant au moins:
- une mémoire,
- un module de communication, adapté pour recevoir et/ou transmettre des données depuis et/ou vers l'extérieur du premier boîtier, un processeur,
- un processeur, adapté pour recevoir et/ou transmettre au moins des données depuis et/ou vers le module de communication,
le procédé étant **caractérisé en ce que** l'électronique de commande et chaque accumulateur électrochimique échangent des données au moyen de chaque module de communication, la communication étant effectuée par courants porteurs en ligne de telle sorte que le courant en sortie des accumulateurs électrochimiques transporte des données codées en un signal d'information,
et **en ce que** soit
- l'électronique de contrôle est branchée en déviation aux bornes de sortie de chaque accumulateur électrochimique, soit,
- l'électronique de contrôle est reliée aux extrémités de la pluralité d'accumulateurs étant branchés en série, chaque processeur d'accumulateur effectuant une opération de modulation du signal d'information en entrée indifféremment de la modulation existante en amont ou sur un intervalle de temps propre à chaque accumulateur.

2. Procédé de communication selon la revendication 1, chaque accumulateur électrochimique branché en aval d'un autre accumulateur effectuant une lecture des informations sur le courant porteur, et reportant sur le courant porteur en plus de son signal d'information les signaux d'informations en amont.

3. Procédé de communication selon l'une des revendications précédentes, le signal d'information transportant des données choisies parmi : la position de chaque accumulateur et/ou un identifiant de chaque accumulateur et/ou la température et/ou la pression au sein du premier boîtier de chaque accumulateur et/ou la tension aux bornes de sortie de courant de chaque accumulateur et/ou le courant de sortie de chaque accumulateur et/ou l'état de santé et/ou l'état de charge de chaque accumulateur et/ou l'historique d'état de santé et/ou d'état de charge et/ou de pression au sein du premier boîtier et/ou de température et/ou de courant de sortie et/ou de tension aux bornes de sortie de courant.

## Patentansprüche

1. Verfahren zur Kommunikation zwischen einer Steuerelektronik und einer Vielzahl von elektrochemischen Akkumulatoren, wobei jeder Akkumulator mindestens umfasst:
• eine elektrochemische Zelle (C), die aus mindestens einer Anode und einer Kathode auf beiden Seiten eines Elektrolyten besteht,
• mindestens zwei Stromausgangsklemmen (2, 4), die jeweils mit der einen oder der anderen von der (den) Anode(n) und der (den) Kathode(n) verbunden sind,
• ein erstes Gehäuse (6), das die elektrochemische(n) Zelle(n) abgedichtet enthält,
• ein zweites Gehäuse (7), das im Inneren des ersten Gehäuses befestigt ist, wobei es in seinem Inneren ein dichtes begrenztes Volumen (70) definiert,
• ein elektronisches Modul (72), das in dem dichten begrenzten Volumen (70) eingerichtet ist, wobei das elektronische Modul (72) mindestens umfasst:
- einen Speicher,
- ein Kommunikationsmodul, das geeignet ist, Daten von der und/oder zur Außenseite des ersten Gehäuses zu empfangen und/oder zu senden, einen Prozessor,
- einen Prozessor, der geeignet ist, mindestens Daten von dem und/oder zum Kommunikationsmodul zu empfangen und/oder zu senden,
wobei das Verfahren **dadurch gekennzeichnet ist, dass** die Steuerelektronik und jeder elektrochemischer Akkumulator Daten mit jedem Kommunikationsmodul austauschen, wobei die Kommunikation durch Leitungsträgerströme derart vorgenommen wird, dass der Strom am Ausgang der elektrochemischen Akkumulatoren in ein Informationssignal codierte Daten transportiert, und dadurch, dass entweder
- die Überwachungselektronik mit den Ausgangsklemmen jedes elektrochemischen Akkumulators in Abweichung ist, oder
- die Überwachungselektronik mit den Enden der Vielzahl von Akkumulatoren verbunden ist, die in Serie angeschlossen sind, wobei jeder Prozessor eines Akkumulators eine Modulationsoperation an dem Informationssignal am Eingang unabhängig von der Modulation vornimmt, die stromaufwärts oder in einem für jeden Akkumulator eigenen Zeitintervall existiert.

2. Verfahren zur Kommunikation nach Anspruch 1,
wobei jeder angeschlossene elektrochemische Akkumulator stromabwärts von einem anderen Akkumulator ein Lesen von Informationen über den Trägerstrom vornimmt und über den Trägerstrom zusätzlich zu seinem Informationssignal die stromaufwärtigen Informationssignale berichtet.

3. Verfahren zur Kommunikation nach einem der vorhergehenden Ansprüche,
wobei das Informationssignal Daten transportiert, die ausgewählt werden aus: der Position jedes Akkumulators und/oder einem Identifikator jedes Akkumulators und/oder der Temperatur und/oder dem Druck im Inneren des ersten Gehäuses jedes Akkumulators und/oder der Spannung an den Stromausgangsklemmen jedes Akkumulators und/oder dem Ausgangsstrom jedes Akkumulators und/oder dem Gesundheitszustand und/oder dem Ladungszustand jedes Akkumulators und/oder dem Verlauf des Gesundheitszustands und/oder des Ladungszustands und/oder des Drucks im Inneren des ersten Gehäuses und/oder der Temperatur und/oder des Ausgangsstroms und/oder der Spannung an den Stromausgangsklemmen.

## Claims

1. Method for communication between control electronics and a plurality of electrochemical accumulators, each accumulator including at least:
• one electrochemical cell (C) consisting of at least one anode and one cathode on either side of an electrolyte;
• at least two current output terminals (2, 4), each linked to one or the other of the one or more anodes and cathodes;
• a first housing (6) containing the one or more electrochemical cells in a leaktight manner;
• a second housing (7) attached to the inside of the first housing and defining within itself a leaktight confined volume (70);
• an electronic module (72) arranged in said leaktight confined volume (70), the electronic module (72) including at least:
- a memory;
- a communication module, suitable for receiving and/or transmitting data from and/or to the outside of the first housing, a processor;
- a processor, suitable for receiving and/or transmitting at least data from and/or to the communication module,
the method being **characterized in that** the control electronics and each electrochemical accumulator exchange data by means of each communication module, the communication being carried out by means of powerline communication currents such that the output current of the electrochemical accumulators carries data coded in an information signal,
and **in that** either
- the monitoring electronics are connected in diversion to the output terminals of each electrochemical accumulator; or
- the monitoring electronics are linked to the ends of the plurality of accumulators connected in series, each accumulator processor performing an operation of modulating the information signal at input regardless of the existing upstream modulation or over a time period specific to each accumulator.

2. Communication method according to Claim 1, each electrochemical accumulator connected downstream of another accumulator reading the information on the powerline communication current and adding to the powerline communication current, in addition to its information signal, the upstream information signals.

3. Communication method according to either of the preceding claims, the information signal carrying data chosen from: the position of each accumulator and/or an identifier of each accumulator and/or the temperature and/or the pressure within the first housing of each accumulator and/or the voltage across the current output terminals of each accumulator and/or the output current of each accumulator and/or the state of health and/or the state of charge of each accumulator and/or the history of the state of health and/or the state of charge and/or of the pressure within the first housing and/or of the temperature and/or of the output current and/or of the voltage across the current output terminals.
